# EUROPÄISCHE PATENTSCHRIFT

(11) **EP 2 017 102 B1**
(45) Veröffentlichungstag und Bekanntmachung des Hinweises auf die Patenterteilung: **02.05.2012**
(21) Anmeldenummer: 08012118.9
(22) Anmeldetag: 04.07.2008
(51) Int. Cl.: B60H 1/00

(54) **Klimaanlagenunterwanne als Dachhautsegment**
Air conditioning unit with a lower sump as a roof cladding segment
Cuve inférieure de climatisation en tant qu'élément de revêtement de toit

(30) Priorität: 19.07.2007 DE 102007033803
(43) Veröffentlichungstag der Anmeldung: 21.01.2009
(73) Patentinhaber: Spheros GmbH, 82205 Gilching (DE)
(72) Erfinder: Scheid, Helmut, 86920 Denklingen (DE)
(74) Vertreter: Strasser, Wolfgang

(56) Entgegenhaltungen:
- DE-A1- 19 913 776
- US-A1- 2002 073 723
- US-A1- 2006 059 932

## Beschreibung

Die Erfindung betrifft ein Personentransportfahrzeug, insbesondere einen Omnibus der im Oberbegriff von Anspruch 1 genannten Art. Weiterhin betrifft die Erfindung die Dachhaut für ein solches Personentransportfahrzeug, eine Klimaanlage zur Montage auf dem Dach eines Personentransportfahrzeugs und ein Verfahren zum Montieren einer derartige Klimaanlage auf einem Fahrzeugdach gemäß den Oberbegriffen der Ansprüche 12, 13 und 15.

Bei Fahrzeugen zum Personentransport, insbesondere Omnibussen werden häufig Klimaanlagen auf dem Dach montiert.

Im Omnibusbau ist es Stand der Technik, das Chassis in Form eines Tragwerks aus Stahl- oder Aluminium-Profilen aufzubauen (,die auch als Spriegel bezeichnet werden), die durch Schweißen, Nieten oder teilweise auch durch Kleben miteinander verbunden werden. Dieses Tragwerk übernimmt zusammen mit geklebten Scheiben die Übertragung der auftretenden Kräfte und Momente.

Das Tragwerk wird mit Außenhautsegmenten verkleidet, die aus Stahlblech, Kunststoff oder Aluminium bestehen können und in der Regel verklebt, stellenweise auch geschweißt oder vernietet werden.

Der Dachbereich des Tragwerks wird mit Dachbahnen versehen, die aus den eben erwähnten Materialienbestehen und in der Regel in Form eines kurzen vorderen und hinteren Segments und eines langen mittleren Segments aufgebracht werden. Diese im Folgenden mit dem Adjektiv "herkömmlich" versehenen Dachhautsegmente werden seitlich an den Längsprofilen sowie an den vorderen und hinteren Querprofilen verklebt. Unter der Dachhaut befinden sich Verstärkungsprofile, welche sie stützen, primär aber für die Festigkeit des Tragwerks erforderlich sind.

Für auf den Fahrzeugdächern vorgesehene Aufbauten, wie Notausstiegsluken, Entlüftungseinrichtungen, Klimaanlagen usw., deren Position nicht von vornherein exakt festgelegt ist, oder die in der Grundausstattung nicht vorgesehen sind, werden gemäß dem Stand der Technik die erforderlichen Ausschnitte in der Dachhaut in der Regel nachträglich in der Weise ausgebildet, dass ihre Positionen durch Schablonen definiert wird und sie dann von Hand ausgeschnitten werden. Im Bereich der Ausschnittstellen sind im Tragwerk noch zusätzliche, unterstützende Profile vorgesehen, um das Gewicht der Aufbauten abzufangen und die erforderliche Dichtigkeit zu gewährleisten.

Klimaanlagen, die für eine Montage auf Fahrzeugdächern bestimmt sind, werden gemäß dem Stand der Technik im Allgemeinen mit einer Gehäuseunterwanne ausgestattet, auf der die Komponenten der Klimaanlage wie Verdampfer, Gebläse, Rohrleitungen usw. montiert werden. Auch sind in der oder diesen Gehäuseunterwannen Einformungen für die Luftführung und zum Auffangen und Ableiten des abgeschiedenen Kondenswassers vorgesehen.

Bei der Montage einer solchen Klimaanlage auf dem Fahrzeugdach wird bisher in der Regel nach dem Ausschneiden der durch die Dachhaut hindurchgehenden Durchbrüche zwischen der Dachoberseite und der Unterseite der Gehäuseunterwanne der Klimaanlage eine Dichtung, beispielsweise ein Hohlkammerdichtprofil eingebracht. Es gibt aber auch Montageverfahren, bei denen flexible Gummiprofile auf dem Busdach oder an der Unterseite der Gehäuseunterwanne der Klimaanlage im Allgemeinen durch Kleben montiert werden.

Am Tragwerk werden Halter montiert, mit denen die Gehäuseunterwanne zum Fahrzeugdach hin gezogen werden kann, um die zwischen Dach-Oberseite und Gehäuseunterwannen-Unterseite angeordneten Dichtungen ausreichend zu pressen. Hierfür ist eine entsprechende Steifigkeit der Gehäuseunterwanne erforderlich, um zu vermeiden, dass sich die Klimaanlage verzieht. Die Tragwerke besitzen erhebliche Fertigungstoleranzen, die sich auf die Halterungen für die Klimaanlage übertragen bzw. von diesen aufgefangen werden müssen.

Es gibt auch Montageverfahren, bei denen die Unterseite der Gehäuseunterwanne der Klimaanlage direkt auf das Fahrzeugdach geklebt wird, wofür eine relativ große Menge an Kleber erforderlich ist. An dem Erfordernis, in der aufgebrachten Dachhaut nachträglich eine Vielzahl von Durchbrüchen ausschneiden zu müssen, ändert sich hierdurch jedoch nichts.

Aus der DE 100 62 686 und aus der US2002/0073723 ist eine zur Montage in einer Dachöffnung eines Omnibusses bestimmte Klimaanlage bekannt, die als Basis ein Profilgerippe umfasst, das in eine entsprechend große Dachöffnung des Fahrzeugs eingesetzt wird, um dort mit dem Tragwerk des Busses so verbunden zu werden, dass es als Teilgerippe des Tragwerks in der Lage ist, die auftretenden Momente zu übertragen. Diese Verbindung gestaltet sich nicht zuletzt wegen der oben bereits erwähnten Toleranzen der Tragwerke schwierig und die Koppelstellen müssen aufwändig ausgeführt werden.

Demgegenüber liegt der Erfindung die Aufgabe zu Grunde, ein Personentransportfahrzeug beziehungsweise eine Dachhaut für ein solches Personentransportfahrzeug, beziehungsweise eine auf dem Dach eines Personentransportfahrzeugs montierbare Klimaanlage sowie ein Verfahren zum Montieren einer solchen Klimaanlage zu schaffen, durch welche das Gesamtgewicht der entstehenden Anordnung reduziert wird, sich das Montageverfahren wesentlich vereinfacht und dadurch die Herstellungs- und Montagekosten erheblich vermindert werden.

Zur Lösung dieser Aufgabe sieht die Erfindung die in den Ansprüchen 1, 12, 13 und 15 niedergelegten Merkmale vor.

Dadurch, dass gemäß der Erfindung die Gehäuseunterwanne der Klimaanlage so ausgebildet ist, dass sie an Stelle eines herkömmlichen Dachhautsegmentes unmittelbar mit den Profilen des fahrzeugseitigen Tragwerks verbunden werden kann, lässt sich eine Vielzahl von Vorteilen erzielen:
1) Der durch die Gehäuseunterwanne ersetzte Dachhautabschnitt in Größe der Grundfläche der Klimaanlage kann entfallen, was per se zu einer Gewichtseinsparung und einer Vereinfachung der Montage führt.
2) Das oder die verbleibenden, zur Abdeckung des verbleibenden Dachbereichs erforderlichen herkömmlichen Dachhautsegmente sind gemäß der Erfindung wesentlich kleiner als das nach dem Stand der Technik benötigte, die gesamte mittlere Dachhaut bildende Segment, wodurch erhebliche Logistikvorteile entstehen.
3) Auch die Gehäuseunterwanne der Klimaanlage kann leichter und damit kostengünstiger ausgeführt werden, weil sie gemäß der Erfindung so mit dem Tragwerk des Fahrzeugs verbunden wird, dass sie selbst keine Kräfte oder Momente aus der Fahrzeugstruktur aufnehmen und/oder übertragen muss. Insbesondere ist die Festigkeit bzw. Steifigkeit nicht mehr erforderlich, welche die Klimaanlage beim Stand der Technik aufweisen muss, um die Kräfte aufnehmen zu können, die zur Erzielung einer ausreichenden Pressung der zwischengefügten Dichtungen erforderlich sind.
4) Weiterhin entfallen alle für dieses Andrücken erforderlichen, zusätzlichen Teile ebenso wie die eben erwähnten Dichtungen.
5) Auch ist es nicht mehr erforderlich, in einer zunächst durchgehend aufgebrachten Dachhaut nachträglich für die Luftführung usw. dienende Öffnungen auszuschneiden, da diese von vornherein in der Gehäuseunterwanne der Klimaanlage ausgebildet sind.
6) Die im Tragwerk des Fahrzeuges vorhandenen Toleranzen spielen für die Montage der Klimaanlage keine rolle mehr.

Zusammenfassend ist festzustellen, dass sich sowohl der Material- als auch der Montageaufwand erheblich vermindern, wodurch eine beträchtliche Zeit- und Kostenersparnis erzielt werden kann.

Um die Steifigkeit der Gehäuseunterwanne noch weiter verringern zu können, ist gemäß dem Montageverfahren nach Anspruch 15 vorgesehen, eine Transport- und Montagevorrichtung, beispielsweise in Form eines Umlauf-Montagegestells zu verwenden, mit dem die Klimaanlage beginnend mit ihrer Herstellung und insbesondere während des Transports zum Fahrzeughersteller und der Montage auf dem Fahrzeugdach verbunden ist, und welche die Klimaanlage für den Transport in der erforderlichen Weise versteift und als Montagehilfe eingesetzt werden kann. Nachdem dann die Klimaanlage durch eine Verbindung, insbesondere Verklebung mit dem Tragwerk des Fahrzeugs die für die weitere Verwendung erforderliche Festigkeit erhalten hat, kann die Transport- und Montagevorrichtung abgenommen und erneut verwendet werden.

Weitere Merkmale und vorteilhafte Ausgestaltungen eines erfindungsgemäßen Personentransportfahrzeugs, einer erfindungsgemäßen Dachkonstruktion für ein solches Fahrzeug sowie einer erfindungsgemäßen Klimaanlage sind in den Unteransprüchen niedergelegt.

Die Erfindung wird im Folgenden an Hand von Ausführungsbeispielen unter Bezugnahme auf die Zeichnung beschrieben; in dieser zeigen:
- Fig. 1: eine perspektivische, auseinander gezogene, schematisierte Darstellung eines gemäß der Erfindung ausgebildeten Dachbereich-Abschnittes eines Personen- transportfahrzeugs und
- Fig. 2: eine schematisierte Draufsicht auf einen gemäß der Erfindung ausgebildeten Dachbereich-Abschnitt eines Personentransportfahrzeugs mit montierter Klima- anlage, deren Abdeckhaube der Deutlichkeit halber weggelassen ist.

In den beiden Fig. sind gleiche bzw. einander entsprechende Teile bzw. Baugruppen mit den gleichen Bezugszeichen bezeichnet.

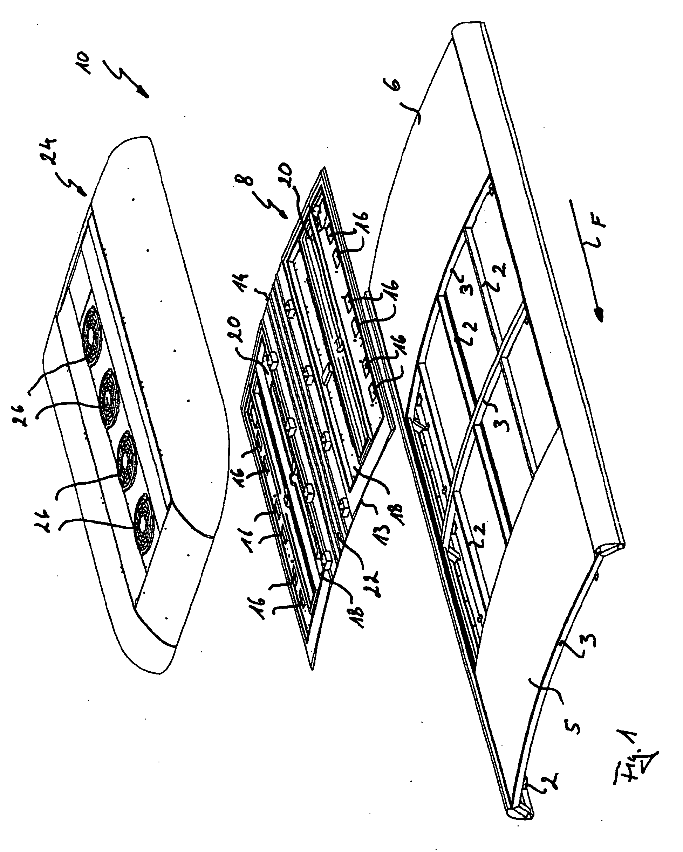

Im unteren Teil von Fig. 1 ist in einer schematisierten, perspektivischen Darstellung ein Teil des Dachbereiches 1 eines erfindungsgemäßen Personentransportfahrzeuges wiedergegeben, wobei alle zum Verständnis der Erfindung nicht erforderlichen Elemente der Einfachheit halber weggelassen sind. Die Fahrtrichtung des Fahrzeuges ist durch den Pfeil F angedeutet.

Es sind nur einige der Längs- und Querprofile 2, 3 dargestellt, die, wie im Fahrzeug- insbesondere Omnibusbau allgemein üblich, mit vertikal verlaufenden, hier nicht wiedergegebenen Profilen verbunden sind, mit denen zusammen sie das Tragwerk des Fahrzeugchassis bilden.

Auf den Längs- und Querprofilen 2, 3 sind ein vorderes und eine hinteres, herkömmliches Dachhautsegment 5 bzw. 6 in bekannter Weise, beispielsweise durch Verkleben befestigt.

Erfindungswesentlich ist, dass ein von diesen herkömmlichen Dachhautsegmenten 5, 6 nicht abgedeckter, "freier" Dachbereich vorhanden ist, der sich bei dem dargestellten Ausführungsbeispiel zwischen diesen Dachhautsegmenten 5, 6 befindet.

Alternativ kann dieser "freie" Dachbereich auch vor dem vordersten oder hinter dem hintersten herkömmlichen Dachhautsegment des Fahrzeugdaches angeordnet sein, das heißt sich direkt an die Vorderkante oder die Hinterkante des Fahrzeugdaches anschließen.

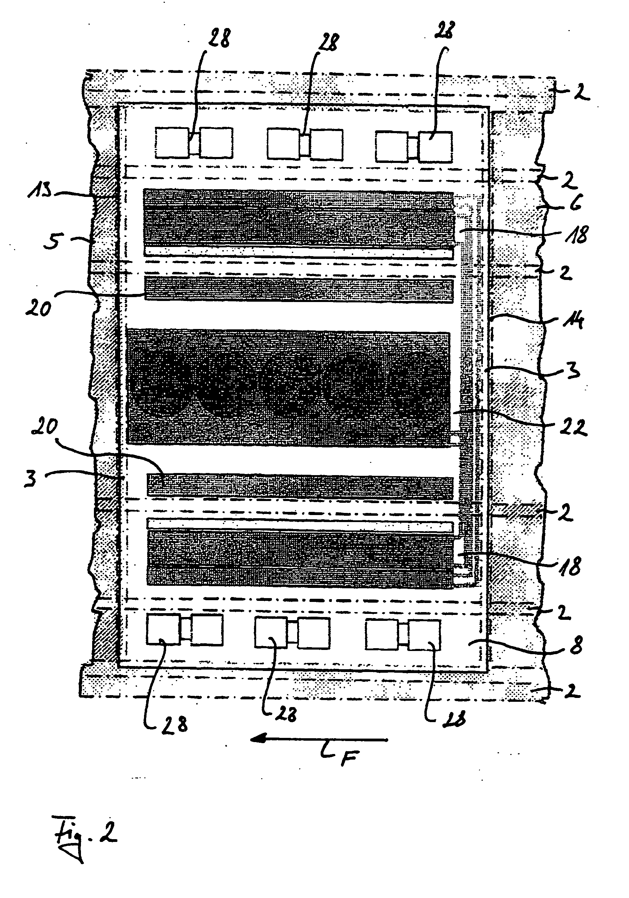

Vorzugsweise erstreckt sich der "freie" Dachbereich über die gesamte Dachbreite, wie dies bei den in den Fig. 1 und 2 dargestellten Ausführungsbeispielen der Fall ist. Alternativ kann er auch eine geringere Breite aufweisen, ohne dass der Grundgedanke der vorliegenden Erfindung verlassen wird. In jedem Fall ist vorgesehen, dass sich zumindest in unmittelbarer Nähe eines jeden Randes des "freien" Dachbereiches ein Längs- bzw. ein Querprofil 2 bzw. 3 des Tragwerks erstreckt, damit die die herkömmlichen Dachhautsegmente 5, 6 ergänzende Gehäuseunterwanne 8 einer erfindungsgemäßen Klimaanlage 10 stabil befestigt werden kann.

Diese Gehäuseunterwanne 8 ist in Fig.1 über dem Fahrzeugdach schwebend dargestellt, liegt im fertig montierten, betriebsbereiten Zustand aber auf den Längs- und Querprofilen 2, 3 des Tragwerks und, optional an ihrer vorderen und/oder hinteren Kante 13, 14 auf den benachbarten herkömmlichen Dachhautsegmenten 5, 6 auf. Zumindest im Bereich einiger dieser Auflageflächen ist die Gehäuseunterwanne 8 mit den darunter befindlichen Bauteilen (Profilen und/oder Dachhautelementen) fest, beispielsweise durch Verkleben und/oder Nieten und/oder Verschraubung verbunden.

Die in Fig. 1 der Einfachheit halber nicht dargestellten Komponenten der Klimaanlage 10 werden auf der Gehäuseunterwanne 8 vor deren Montage auf dem Fahrzeugdach aufgebaut und von dieser getragen. Man erkennt jedoch in Fig. 1 unter anderem die Öffnungen 16, durch die hindurch auf der Gehäuseunterwanne 8 montierte Gebläse (nicht dargestellt) die in der Klimaanlage 10 konditionierte Luft in Richtung Fahrzeuginnenraum blasen, sowie Montagebereiche 18 für die Verdampfer, Öffnungen 20 zum Ansagen von Luft aus dem Fahrzeuginnenraum, und einen Montagebereich 22 für einen zentral angeordneten Kondensator.

Diese und alle übrigen, auf der Gehäuseunterwanne 8 montierten Komponenten der Klimaanlage 10 werden von einer in Fig. 1 ebenfalls schematisch wiedergegebenen Haubenanordnung 24 überdeckt, in deren Zentralbereich die in Längsrichtung des Fahrzeugs hintereinander angeordneten Luftdurchtrittsöffnungen 26 für die Kondensatorgebläse dargestellt sind.

Das in Fig. 2 in einer stark schematisierten Draufsicht wiedergegebene Ausführungsbeispiel unterscheidet sich von dem aus Fig. 1 nur in Details, die für die Erfindung nicht von Bedeutung sind, so z.B. in der Anzahl der Kondensatorgebläse. Auch sind hier statt der Öffnungen 16 für die Zuluft die zugehörigen Gebläse 28 dargestellt.

Man sieht, dass die Gehäuseunterwanne 8 an ihrer Vorderkante 13 das anschließende herkömmliche Dachhautsegment 5 überlappt und auf diesem verklebt ist; auch an ihrer Hinterkante14 überlappt sie das anschließende, herkömmliche Dachhautsegment 6 und ist zusammen mit diesem auf dem darunter verlaufenden Querprofil 3 verklebt. Auch unter dem Überlappungsbereich zwischen Gehäuseunterwanne 8 und vorderem Dachhautsegment 5 verläuft ein Querprofil 3 des Tragwerks, was vorteilhaft ist, um die beim Verkleben der Gehäuseunterwanne 8 mit dem Dachhautsegment 5 erforderlichen, nach unten gerichteten Andrückkräfte aufnehmen zu können. Weiterhin ist die Gehäuseunterwanne 8 zumindest im Bereich ihrer in Fig. 2 oben bzw. unten liegenden seitlichen Außenkanten mit den darunter verlaufenden Längsprofilen 2 verklebt. Gewünschtenfalls ist auch eine Verklebung oder sonstige Verbindung mit einem Teil oder allen der übrigen unter der Gehäuseunterwanne verlaufenden Längs- und Querprofile 2, 3 möglich.

## Patentansprüche

1. Personentransportfahrzeug, insbesondere Omnibus,
dessen Chassis ein aus einer Vielzahl von miteinander verbundenen Profilen aufgebautes Tragwerk umfasst, das mit Außenhautsegmenten verkleidet ist, und im Dachbereich (1) Längs- und Querprofile (2, 3) aufweist, auf denen die aus mehreren Dachhautsegmenten (5, 6) bestehende Dachhaut aufliegt, und auf dessen Dach eine Klimaanlage (10) montiert ist, deren Komponenten auf einer Gehäuseunterwanne (8) befestigt sind,
wobei
die Gehäuseunterwanne (8) eines der unmittelbar mit dem fahrzeugseitigen Tragwerk verbundenen Segmente der Dachhaut bildet.

2. Personentransportfahrzeug nach Anspruch 1, **dadurch gekennzeichnet, dass** sich die Gehäuseunterwanne (8) über die gesamte Breite des Daches des Personentransportfahrzeugs erstreckt.

3. Personentransportfahrzeug nach Anspruch 1 oder 2, **dadurch gekennzeichnet, dass** die Gehäuseunterwanne (8) auf den an ihren Seitenrändern verlaufenden Längsprofilen (2) des Tragwerks verklebt ist.

4. Personentransportfahrzeug nach einem der vorhergehenden Ansprüche, **dadurch gekennzeichnet, dass** zusätzlich zur Gehäuseunterwanne (8) wenigstens zwei weitere Dachhautsegmente (5, 6) vorgesehen sind, die in Längsrichtung vor und hinter der Gehäuseunterwanne (8) angeordnet sind.

5. Personentransportfahrzeug nach Anspruch 4, **dadurch gekennzeichnet, dass** die Gehäuseunterwanne (8) wenigstens eines der sich an sie in anschließenden Dachhautsegmente (5, 6) überlappt und auf diesem verklebt ist.

6. Personentransportfahrzeug nach Anspruch 5, **dadurch gekennzeichnet, dass** in unmittelbarer Nähe des Bereiches, in welchem die Gehäuseunterwanne (8) das wenigstens eine der sich an sie in anschließenden Dachhautsegmente (5, 6) überlappt, ein Querprofil (3) des fahrzeugseitigen Tragwerks angeordnet ist.

7. Personentransportfahrzeug nach einem der vorhergehenden Ansprüche, **dadurch gekennzeichnet, dass** unter der Gehäuseunterwanne (8) der Klimaanlage (10) Längs- und/oder Querprofile (2, 3) des Tragwerks verlaufen.

8. Personentransportfahrzeug nach Anspruch 7, **dadurch gekennzeichnet, dass** die Gehäuseunterwanne (8) auf wenigstens einem der unter ihr hindurch verlaufenden Längs- und/oder Querprofile verklebt ist.

9. Personentransportfahrzeug nach einem der vorhergehenden Ansprüche, **dadurch gekennzeichnet, dass** zur Verbindung der Gehäuseunterwanne (8) mit dem fahrzeugseitigen Tragwerk ein pastöser Kleber Verwendung findet.

10. Personentransportfahrzeug nach Anspruch 9, **dadurch gekennzeichnet, dass** der pastöse Kleber vor der Montage der Klimaanlage (10) auf dem fahrzeugseitigen Tragwerk auf den betreffenden Stellen des Tragwerks aufgebracht ist.

11. Personentransportfahrzeug nach Anspruch 9 oder 10, **dadurch gekennzeichnet, dass** der pastöse Kleber vor der Montage der Klimaanlage (10) auf dem fahrzeugseitigen Tragwerk auf den betreffenden Stellen der Gehäuseunterwanne (8) aufgebracht ist.

12. Dachhaut für ein Personentransportfahrzeug, insbesondere einen Omnibus, die aus mehreren Segmenten besteht, die auf den im Dachbereich des Tragwerks des Personentransportfahrzeugs vorgesehenen Längs- und Querprofilen (2, 3) aufliegen, **dadurch gekennzeichnet, dass** eines der Segmente die Gehäuseunterwanne (8) einer Klimaanlage (10) ist.

13. Klimaanlage (10) für die Montage auf dem Dach eines Personentransportfahrzeugs, insbesondere eines Omnibusses, dessen Dach mehrere Segmente umfasst, wobei die Klimaanlage (10) eine Gehäuseunterwanne (8) aufweist, auf der die Komponenten der Klimaanlage (10) montiert sind, **dadurch gekennzeichnet, dass** die Gehäuseunterwanne (8) eines der Dachsegmente bildet.

14. Klimaanlage (10) nach Anspruch 13, **dadurch gekennzeichnet dass** sie vor der Montage auf dem fahrzeugseitigen Tragwerk mit einer Transport- und/oder Montagevorrichtung verbunden ist, die ihr die für den Transport und die Montage erforderliche Steifigkeit verleiht und die nach der Befestigung der Klimaanlage (10) auf den fahrzeugseitigen Tragwerk entfernbar ist.

15. Verfahren zur Herstellung und Montage einer Klimaanlage (10) auf dem Dach eines Personentransportfahrzeugs, insbesondere eines Omnibusses, **dadurch gekennzeichnet,**
**dass** die Komponenten der Klimaanlage (10) auf einer eine geringe Eigensteifigkeit aufweisenden, als Dachsegment für ein Personentransportfahrzeug ausgebildeten Gehäuseunterwanne (8) montiert werden,
**dass** die Gehäuseunterwanne (8) mit einer Transport- und/oder Montagevorrichtung verbunden wird, die der Klimaanlage (10) die für den Transport und die Montage erforderliche Steifigkeit verleiht,
**dass** die so gebildete Baueinheit an ihrem Montageort auf dem Dachbereich (1) des Tragwerks eines Personentransportfahrzeugs positioniert wird,
**dass** die Gehäuseunterwanne (8) der Klimaanlage (10) mit dem fahrzeugseitigen Tragwerk so verbunden wird, dass sie ein das Tragwerk verkleidendes Dachsegment bildet, und
**dass** nach der Herstellung dieser Verbindung die Transport- und/oder Montagevorrichtung abgenommen wird.

## Claims

1. A passenger transport vehicle, in particular a bus,
the chassis of which includes a support structure which is made up of a plurality of interconnected profile members and which is clad with external skin segments and which in the roof region (1) has longitudinal and transverse profile members (2, 3), on which the roof skin comprising a plurality of roof skin segments (5, 6) rests, and
on the roof of which is mounted an air conditioning arrangement (10), the components of which are fixed on a lower housing tray (8),
wherein the lower housing tray (8) forms one of the segments of the roof skin, that are connected directly to the support structure at the vehicle side.

2. A passenger transport vehicle according to claim 1 **characterised in that** the lower housing tray (8) extends over the entire width of the roof of the passenger transport vehicle.

3. A passenger transport vehicle according to claim 1 or claim 2 **characterised in that** the lower housing tray (8) is glued on the longitudinal profile members (2) of the support structure, that extend at the side edges of the lower housing tray.

4. A passenger transport vehicle according to one of the preceding claims **characterised in that** in addition to the lower housing tray (8) there are provided at least two further roof skin segments (5, 6) arranged in front of and behind the lower housing tray (8) in the longitudinal direction.

5. A passenger transport vehicle according to claim 4 **characterised in that** the lower housing tray (8) overlaps and is glued to at least one of the roof skin segments (5, 6) adjoining it.

6. A passenger transport vehicle according to claim 5 **characterised in that** arranged in the immediate proximity of the region in which the lower housing tray (8) overlaps the at least one of the roof skin segments (5, 6) adjoining it is a transverse profile member (3) of the carrier structure at the vehicle side.

7. A passenger transport vehicle according to one of the preceding claims **characterised in that** longitudinal and/or transverse profile members (2, 3) of the support structure extend under the lower housing tray (8) of the air conditioning arrangement (10).

8. A passenger transport vehicle according to claim 7 **characterised in that** the lower housing tray (8) is glued on at least one of the longitudinal and/or transverse profile members extending through below it.

9. A passenger transport vehicle according to one of the preceding claims **characterised in that** a pasty adhesive is used to join the lower housing tray (8) to the support structure at the vehicle side.

10. A passenger transport vehicle according to claim 9 **characterised in that** the pasty adhesive is applied to the appropriate locations of the carrier structure prior to mounting of the air conditioning arrangement (10) on the support structure at the vehicle side.

11. A passenger transport vehicle according to claim 9 or claim 10 **characterised in that** the pasty adhesive is applied to the appropriate locations of the lower housing tray (8) prior to mounting of the air conditioning arrangement (10) on the support structure at the vehicle side.

12. A roof skin for a passenger transport vehicle, in particular a bus, which comprises a plurality of segments which rest on the longitudinal and transverse profile members (2, 3) provided in the roof region of the carrier structure of the passenger transport vehicle, **characterised in that** one of the segments is the lower housing tray (8) of an air conditioning arrangement (10).

13. An air conditioning arrangement (10) for mounting on the roof of a passenger transport vehicle, in particular a bus, the roof of which includes a plurality of segments, wherein the air conditioning arrangement (10) has a lower housing tray (8) on which the components of the air conditioning arrangement (10) are mounted, **characterised in that** the lower housing tray (8) forms one of the roof segments.

14. An air conditioning arrangement (10) according to claim 13 **characterised in that** prior to mounting on the support structure at the vehicle side the air conditioning arrangement is connected to a transport and/or mounting apparatus which imparts thereto the stiffness required for transport and mounting and which is removable after fixing of the air conditioning arrangement (10) on the carrier structure at the vehicle side.

15. A method of manufacturing and mounting an air conditioning arrangement (10) on the roof of a passenger transport vehicle, in particular a bus, **characterised in that**
the components of the air conditioning arrangement (10) are mounted on a lower housing tray (8) having a low degree of inherent stiffness and in the form of a roof segment for a passenger transport vehicle,
the lower housing tray (8) is connected to a transport and/or mounting apparatus which imparts to the air conditioning arrangement (10) the stiffness required for transport and mounting,
the structural unit formed **in that** way is positioned at its location of mounting on the roof region (1) of the support structure of a passenger transport vehicle,
the lower housing tray (8) of the air conditioning arrangement (10) is so joined to the support structure at the vehicle side that it forms a roof segment cladding the support structure, and
after that join is made the transport and/or mounting apparatus is removed.

## Revendications

1. Véhicule de transport de personnes, en particulier un omnibus, dont le châssis comprend une structure porteuse formée d'une pluralité de profilés raccordés les uns aux autres, laquelle est habillée de segments de couverture externe, et qui comporte des profilés longitudinaux et transversaux (2, 3) dans la zone du toit (1), sur lesquels repose la couverture de toit formée de plusieurs segments de couverture de toit (5, 6), et sur le toit duquel est montée une installation de climatisation (10) dont les composants sont fixés sur un carter inférieur (8),
le carter inférieur (8) formant un des segments de la couverture de toit directement raccordés à la structure porteuse située du côté du véhicule.

2. Véhicule de transport de personnes selon la revendication 1, **caractérisé en ce que** le carter inférieur (8) s'étend sur toute la largeur du toit du véhicule de transport de personnes.

3. Véhicule de transport de personnes selon la revendication 1 ou la revendication 2, **caractérisé en ce que** le carter inférieur (8) est collé sur les profilés longitudinaux (2) de la structure porteuse qui s'étendent sur ses bords latéraux.

4. Véhicule de transport de personnes selon l'une des revendications précédentes, **caractérisé en ce qu'**au moins deux autres segments de couverture de toit (5, 6) sont prévus en plus du carter inférieur (8), lesquels sont disposés en avant et en arrière du carter inférieur (8) dans la direction longitudinale.

5. Véhicule de transport de personnes selon la revendication 4, **caractérisé en ce que** le carter inférieur (8) chevauche au moins un des segments de couverture de toit (5, 6) qui lui sont raccordés et est collé sur celui-ci.

6. Véhicule de transport de personnes selon la revendication 5, **caractérisé en ce qu'**un profilé transversal (3) de la structure porteuse située du côté du véhicule est disposé à proximité immédiate de la zone où le carter inférieur (8) chevauche le ou les segments de couverture de toit parmi ceux (5, 6) qui lui sont raccordés.

7. Véhicule de transport de personnes selon l'une des revendications précédentes, **caractérisé en ce que** des profilés longitudinaux et/ou transversaux (2, 3) de la structure porteuse s'étendent sous le carter inférieur (8) de l'installation de climatisation (10).

8. Véhicule de transport de personnes selon la revendication 7, **caractérisé en ce que** le carter inférieur (8) est collé sur au moins un des profilés longitudinaux et/ou transversaux qui s'étendent sous lui.

9. Véhicule de transport de personnes selon l'une des revendications précédentes, **caractérisé en ce qu'**une colle pâteuse est utilisée pour le raccordement du carter inférieur (8) à la structure porteuse située du côté du véhicule.

10. Véhicule de transport de personnes selon la revendication 9, **caractérisé en ce que** la colle pâteuse est appliquée aux emplacements correspondants de la structure porteuse avant le montage de l'installation de climatisation (10) sur la structure porteuse située du côté du véhicule.

11. Véhicule de transport de personnes selon la revendication 9 ou la revendication 10, **caractérisé en ce que** la colle pâteuse est appliquée aux emplacements correspondants du carter inférieur (8) avant le montage de l'installation de climatisation (10) sur la structure porteuse située du côté du véhicule.

12. Couverture de toit pour un véhicule de transport de personnes, en particulier un omnibus, composée de plusieurs segments reposant sur les profilés longitudinaux et transversaux (2, 3) prévus dans la zone du toit de la structure porteuse du véhicule de transport de personnes, **caractérisée en ce qu'**un des segments est le carter inférieur (8) d'une installation de climatisation (10).

13. Installation de climatisation (10) destinée à être montée sur le toit d'un véhicule de transport de personnes, en particulier d'un omnibus dont le toit comprend plusieurs segments, ladite installation de climatisation (10) comportant un carter inférieur (8) sur lequel sont montés les composants de l'installation de climatisation (10), **caractérisée en ce que** le carter inférieur (8) forme un des segments de toit.

14. Installation de climatisation (10) selon la revendication 13, **caractérisée en ce qu'**avant montage sur la structure porteuse située du côté du véhicule, ladite installation de climatisation est raccordée à un dispositif de transport et/ou de montage, qui lui confère la rigidité exigée pour le transport et le montage, et qui peut être retiré après fixation de l'installation de climatisation (10) sur la structure porteuse située du côté du véhicule.

15. Procédé de fabrication et de montage d'une installation de climatisation (10) sur le toit d'un véhicule de transport de personnes, en particulier d'un omnibus, **caractérisé**
**en ce que** les composants de l'installation de climatisation (10) sont montés sur un carter inférieur (8) présentant une faible rigidité propre et réalisé comme segment de toit pour un véhicule de transport de personnes,
**en ce que** le carter inférieur (8) est raccordé à un dispositif de transport et/ou de montage, qui confère à l'installation de climatisation (10) la rigidité exigée pour le transport et le montage,
**en ce que** l'unité de construction ainsi formée est mise en place à son emplacement de montage sur la zone du toit (1) de la structure porteuse d'un véhicule de transport de personnes,
**en ce que** le carter inférieur (8) de l'installation de climatisation (10) est raccordé à la structure porteuse située du côté du véhicule de manière à former un segment de toit habillant la structure porteuse, et
**en ce que** le dispositif de transport et/ou de montage est retiré après réalisation de ce raccordement.
